# EUROPEAN PATENT SPECIFICATION

(11) **EP 2 548 752 B1**
(45) Date of publication and mention of the grant of the patent: **16.12.2015**
(21) Application number: 11005883.1
(22) Date of filing: 19.07.2011
(51) Int. Cl.: B60H 1/00, B60H 1/26, B62D 33/06, B62D 25/16

(54) **Agricultural vehicle**
Landwirtschaftsfahrzeug
Véhicule agricole

(43) Date of publication of application: 23.01.2013
(73) Proprietor: CLAAS Tractor S.A.S., 78141 Vélizy-Villacoublay Cedex (FR)
(72) Inventor: Teixeira, David, 78300 Poissy (FR); Rondeau, Denis, 92360 Meudon-la-Forêt (FR); Seddiki, Mohamed, 91940 Les Ulis (FR)
(74) Representative: Heuer, Wilhelm

(56) References cited:
- US-A- 2 764 078
- US-A- 4 385 549
- US-A- 5 833 528

## Description

The present invention relates to an agricultural vehicle having a driver cabin and means for supplying fresh air to the driver cabin.

A conventional vehicle of this type is known from WO 2010/066877 A1. In this vehicle, an air conditioning unit comprising a blower for introducing fresh air to the driver cabin is located in a rear bottom region of the driver cabin and draws fresh outside air through a fresh air duct that extends from an inlet opening at the top of the driver cabin through the roof and the rear wall of the cabin to the air conditioning unit, and from there to outlet openings formed near the cabin floor. In order to accommodate the fresh air duct in the cabin roof, the roof must have a certain minimum thickness which adds to the overall height of the vehicle. Due to the considerable length and the multiple turns of the fresh air duct, substantial power is required for propelling the air through it.

As an alternative, it has been suggested to provide an inlet opening of a fresh air duct in a rear wall of the driver cabin. This has the disadvantage, however, that the space occupied by the inlet opening is not available for a window, so that the driver's view is impaired, a fact which is particularly inconvenient in an agricultural vehicle such as a tractor, since the driver should have an unimpeded view of machinery the vehicle is drawing.

One might also think of providing an inlet opening of the fresh air duct in a forward portion of the vehicle body, in front of the driver cabin. The inconvenient of this approach is, however, that in front of the driver cabin, air ducts extending from the inlet opening to the air conditioning unit, air ducts extending from the air conditioning unit to outlet openings in the driver cabin, and controls of the vehicle compete for space, which makes installation of the air ducts laborious and expensive. US 5833528 shows an agricultural vehcile according to the preamble of claim 1.

The object of the present invention is, therefore, to provide an agricultural vehicle in which fresh air can be supplied to the driver cabin in a simple and convenient way, without an air duct increasing the external dimensions of the agricultural vehicle.

This object is achieved by an agricultural vehicle having a vehicle body, a driver cabin and a fresh air duct extending between at least one inlet opening formed on the outside of the vehicle body and at least one outlet opening in the driver cabin, which has its inlet opening formed in a rear fender.

In order to prevent an excessive ingress of dust raised by the wheels of the vehicle into the fresh air duct, the inlet opening is preferably formed in a portion of the rear fender which is in front of a rear axle of the vehicle, so that at least while the vehicle is advancing, headwind will blow dust raised by the rear wheels away from the inlet opening.

The quantity of dust raised by the front wheels of the vehicle is usually smaller than that raised by the rear wheels due to their smaller size. The quantity of dust from the front wheels which is introduced into the fresh air duct can be reduced by placing the inlet opening at a level above the summit of the front wheels.

In an agricultural vehicle such as a tractor, it is common that the fender be substantially in the shape of an arc extending around a rear wheel and have an inner side facing the rear wheel and an outer side opposite to said inner side. In order to prevent an excessive ingress of dust into the fresh air duct, the inlet opening should be formed in said outer side.

According to a preferred embodiment, said outer side is step-shaped in cross section, and the inlet opening is formed in a steep flank of the step, in order to keep rain out of the fresh air duct. Further, a grid provided at the inlet opening may assist in keeping foreign matter such as dust or rain out of the fresh air duct.

At least part of the fender may be formed as a hollow body, for example in order to increase its stability in spite of reduced wall thickness. The cavity of such a hollow body may conveniently be used as a part of the fresh air duct.

In order to improve the stability of the fender, in a cavity delimited by inner and outer walls, the inner wall may have indentations formed in it which support the outer wall.

A downstream portion of the fresh air duct may be formed in a rear wall of the driver cabin.

In particular, a junction between upstream portions formed in right and left rear fenders of the vehicle and said downstream portion may be provided in said rear wall.

For controlling the temperature in the driver cabin, a cooling and/or heating unit may be provided at the fresh air duct.

Such a unit is preferably provided below the level of a driver's seat, either inside or outside the driver cabin.

Further features and advantages of the invention will become apparent from the subsequent description of embodiments thereof referring to the appended drawings.
- Fig. 1: is an overall view of an agricultural vehicle according to the present invention;
- Fig. 2: is a perspective view of the fresh air duct of the vehicle of Fig. 1;
- Fig. 3: shows the left rear fender of the vehicle of Fig. 1 in section along plane III-III of Fig. 2;
- Fig. 4: shows the left rear fender according to a second embodiment in a view analogous to that of Fig. 3; and
- Fig. 5: shows the fender in section along plane V-V of Fig. 2.

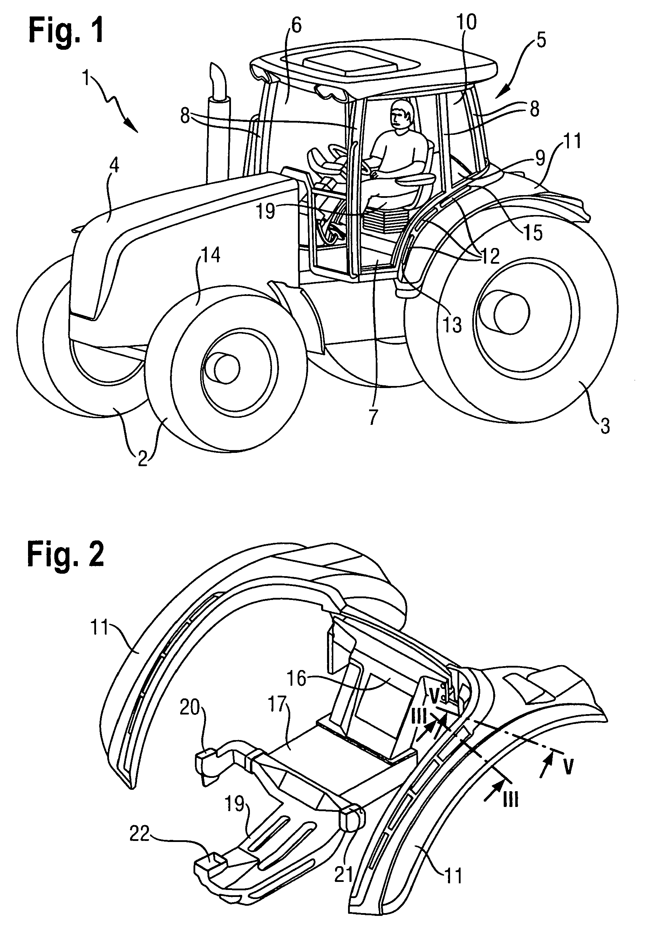

The tractor 1 illustrated in Fig. 1 has a chassis with front and rear wheels 2, 3, and an engine casing 4 and a driver cabin 5 supported by the chassis. The front side of the driver cabin 5 is almost entirely made up of a windshield 6, so as to offer the driver an unimpeded view of a field or road surface in front of the tractor up to and including its front wheels 2. Doors 7 of the driver cabin 5 are also almost entirely constituted by glass panes. Vertical columns 8 extend between the windshield 6 and the doors 7, between the doors 7 and lateral windows 9, and between the lateral window and a rear window 10 which in Fig. 1 is visible only through the driver cabin 5. Since the columns 8 comprise no air ducts, their thickness may be reduced to a minimum, so that the driver has an excellent view in all directions.

Arc-shaped rear fenders 11 extend circumferentially around an upper portion of rear wheels 3.

Fresh air inlet openings 12 are formed at an outer side of rear fenders 11.

The elongate inlet openings 12 extend along the arc formed by each fender 11 and have a lower or forward end 13 located somewhat higher than the summit 14 of the front wheels 2, and an upper or rear end 15 which is located slightly in front of a vertical plane extending through the axle of the rear wheels 3, so that dust which is blown off the wheels 2, 3 horizontally when the vehicle is advancing will not reach the inlet openings 12.

Fig. 2 is a perspective view of a fresh air duct of the tractor of Fig 1. Upstream portions of the air duct are formed by the left and right rear fenders 11, and a downstream portion comprises an inlet manifold 16 located in the rear wall of the driver cabin 5, below rear window 10, and connected to the fenders 11, an air conditioning unit 17, and an outlet manifold 18. Air conditioning unit 17 is located underneath the driver's seat 19 (see Fig. 1), and outlet manifold 18 extends underneath a floor plane of driver cabin 5. Outlet openings 20, 21, 22 of outlet manifold 18 connect to ducts, not shown, inside driver cabin 5. Outlet nozzles of the ducts connected to openings 20, 21 may be located below inclined rear edges of the doors 7, opposite to inlet openings 12 at an inner side of the cabin wall, for blowing at the driver from the sides. Outlet opening 22 feeds nozzles located in front of the driver, e.g. in a dashboard 23, near controls of the vehicle, or at a lower edge of windshield 6.

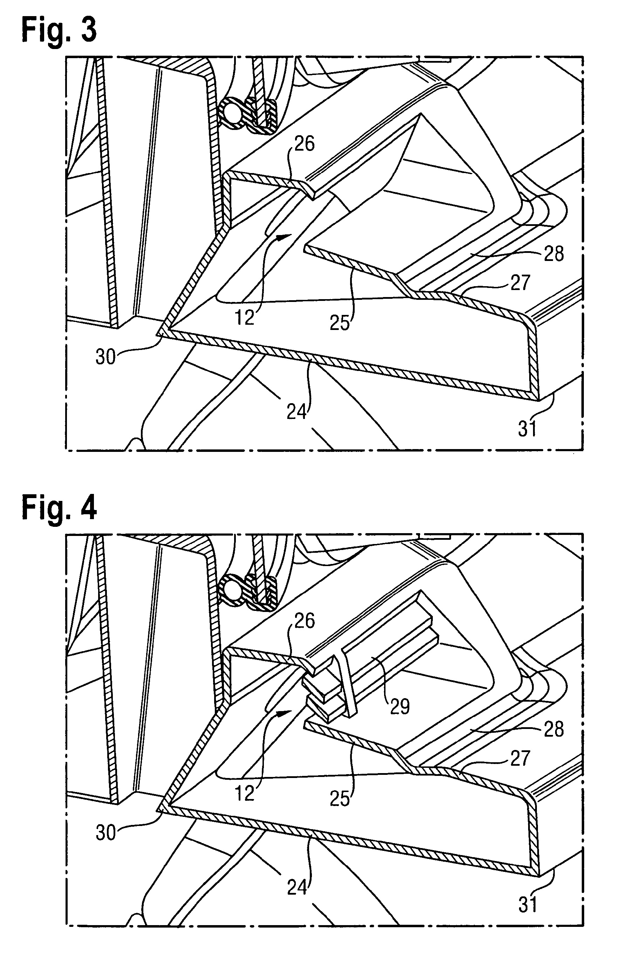

Fig. 3 is a perspective view of left hand rear fender 11, in section along plane III-III of Fig. 2. From this cross section it is apparent that fender 11 is a hollow body having a bottom wall 24 facing rear wheel 3, a top wall 25 and a cavity in between which forms an upstream portion of the fresh air duct. In the section plane of Fig. 3, the top wall 25 is step-shaped, with horizontal or slightly inclined portions 26, 27, and a steep flank between portions 26, 27, in which the inlet openings 12 are formed. Rainwater is prevented from entering the inlet openings 12 by an outer edge of upper horizontal portion 26 slightly overlapping an inner edge of lower horizontal portion 27, and lower portion 27 being slightly inclined away from opening 12. A groove 28 extends in portion 27 all along the inlet openings 12, so as to guide rain water away from the inlet openings 12.

In order to prevent coarse particles from entering the air duct, a grid 29 may be provided at inlet openings 12, as shown in Fig. 4.

The fender 11 may be obtained by cutting and deep-drawing two pieces of sheet material, e.g. metal or plastic, and joining these at their edges, e.g. by welding or gluing. One of the two pieces of sheet material may respond to the bottom wall 24 and the other to top wall 25, so that glowing or welding seams extend along inner and outer edges 30, 31 of fender 11. Alternatively, the two pieces of sheet material might meet at the inlet openings 12, one of them forming portion 26 and the other portion 27. As a further alternative, forming the fender 11 in one piece, e.g. by blow-molding, is conceivable.

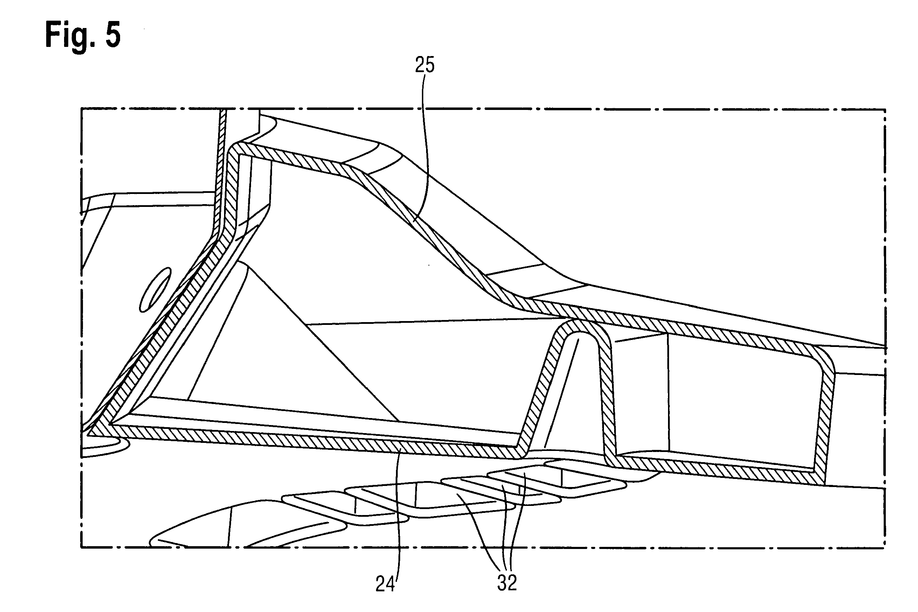

Fig. 5 is a section of fender 11 taken along plane V-V of Fig. 2. This section shows a portion of the fresh air duct downstream from the inlet openings 12. In the bottom wall 24, a series of indentations 32 is formed, the tips of which are in contact with an inner side of top wall 25. By thus supporting the top wall 25, in indentations 32 contribute to the rigidity of fender 11, in particular if they are glued or welded to top wall 25.

### Reference numerals

- 1: tractor
- 2: front wheel
- 3: rear wheel
- 4: engine casing
- 5: driver cabin
- 6: windshield
- 7: door
- 8: column
- 9: lateral windows
- 10: rear window
- 11: rear fender
- 12: inlet openings
- 13: front end
- 14: summit
- 15: rear end
- 16: downstream portion
- 17: air conditioning unit
- 18: outlet manifold
- 19: driver's seat
- 20: outlet opening
- 21: outlet opening
- 22: outlet opening
- 23: dashboard
- 24: bottom wall
- 25: top wall
- 26: horizontal portion
- 27: horizontal portion
- 28: groove
- 29: grid
- 30: edge
- 31: edge
- 32: indentation

## Claims

1. An agricultural vehicle (1) having a vehicle body, a driver cabin (5), and a fresh air duct extending between at least one inlet opening (12) formed on the outside of the vehicle body and the driver cabin (5), **characterized in that** the inlet opening (12) is formed in a rear fender (11) of the vehicle body.

2. The agricultural vehicle of claim 1 in which the inlet opening (12) is formed in a portion of the rear fender (11) which is in front of a rear axle.

3. The agricultural vehicle of claim 1 or 2, wherein the inlet opening (12) is located above the summit (14) of front wheels (2) of the vehicle (1).

4. The agricultural vehicle of any of the preceding claims, wherein the fender (11) is substantially in the shape of an arc extending around a rear wheel (3) and having an inner side (24) facing the rear wheel (3) and an outer side (25) opposite to said inner side (24), the inlet (12) opening being formed in said outer side (25).

5. The agricultural vehicle of claim 4, wherein the outer side (25) is step-shaped in cross section, the inlet opening (12) being formed in a steep flank of the step.

6. The agricultural vehicle of any of the preceding claims, wherein the inlet opening (12) comprises a grid (29).

7. The agricultural vehicle of any of the preceding claims, wherein at least part of said fender (11) is a hollow body, a cavity of which forms part of said fresh air duct.

8. The agricultural vehicle of claim 7, wherein the cavity is delimited by inner and outer walls (24, 25), the inner wall (24) having indentations (32) formed in it which support the outer wall (25).

9. The agricultural vehicle of any of the preceding claims, wherein the fresh air duct comprises an upstream portion extending within said fender (11) and a downstream portion, at least part (16) of which is formed in a rear wall of the driver cabin (5) .

10. The agricultural vehicle of any of the preceding claims, in which inlet openings (12) and fresh air duct upstream portions are formed in left and right rear fenders (11), and a manifold (16) at which the upstream portions meet is formed in said rear wall.

11. The agricultural vehicle of any of the preceding claims, wherein a cooling and/or heating unit (17) is provided at said fresh air duct.

12. The agricultural vehicle of claim 10, wherein said unit (17) is provided below the level of a driver's seat (19).

## Patentansprüche

1. Landwirtschaftliches Fahrzeug (1) mit einer Karosserie, einer Fahrerkabine (5) und einem Frischluftkanal, der sich zwischen wenigstens einer an der Außenseite der Karosserie gebildeten Einlassöffnung (12) und der Fahrerkabine (5) erstreckt, **dadurch gekennzeichnet, dass** die Einlassöffnung (12) in einem hinteren Kotflügel (11) der Karosserie gebildet ist.

2. Landwirtschaftliches Fahrzeug nach Anspruch 1, bei dem die Einlassöffnung (12) in einem Abschnitt des hinteren Kotflügels (11) gebildet ist, der sich vor einer Hinterachse befindet.

3. Landwirtschaftliches Fahrzeug nach Anspruch 1 oder 2, bei dem die Einlassöffnung (12) über dem Scheitel (14) von Vorderrädern (2) des Fahrzeugs (1) liegt.

4. Landwirtschaftliches Fahrzeug nach einem der vorhergehenden Ansprüche, bei dem der Kotflügel (11) im wesentlichen die Gestalt eines Bogens hat, der sich um ein Hinterrad (3) erstreckt und der eine dem Hinterrad (3) zugewandte Innenseite (24) und eine zu der Innenseite (24) entgegengesetzte Außenseite (25) hat, wobei die Einlassöffnung (12) in der Außenseite (25) gebildet ist.

5. Landwirtschaftliches Fahrzeug nach Anspruch 4, bei dem die Außenseite (25) im Querschnitt stufenförmig ist und die Einlassöffnung (12) in einer steilen Flanke der Stufe gebildet ist.

6. Landwirtschaftliches Fahrzeug nach einem der vorhergehenden Ansprüche, bei dem die Einlassöffnung (12) ein Gitter (29) umfasst.

7. Landwirtschaftliches Fahrzeug nach einem der vorgehenden Ansprüche, bei dem wenigstens ein Teil des Kotflügels (11) ein Hohlkörper ist, wobei ein Hohlraum desselben Teil des Frischluftkanals ist.

8. Landwirtschaftliches Fahrzeug nach Anspruch 7, bei dem der Hohlraum durch Innen- und Außenwände (24, 25) begrenzt ist, und wobei in der Innenwand (24) Einbuchtungen (32) geformt sind, die die Außenwand (25) stützen.

9. Landwirtschaftliches Fahrzeug nach einem der vorhergehenden Ansprüche, bei dem der Frischluftkanal einen sich in dem Kotflügel (11) erstreckenden stromaufwärtigen Abschnitt und einen stromabwärtigen Abschnitt umfasst, von dem wenigstens ein Teil (16) in einer Rückwand der Fahrerkabine (5) gebildet ist.

10. Landwirtschaftliches Fahrzeug nach einem der vorhergehenden Ansprüche, bei dem Einlassöffnungen (12) und stromaufwärtige Abschnitte des Frischluftkanals in linken und rechten hinteren Kotflügeln (11) gebildet sind, und ein Zusammenfluss (16), an dem die stromaufwärtigen Abschnitte aufeinandertreffen, in der Rückwand gebildet ist.

11. Landwirtschaftliches Fahrzeug nach einem der vorhergehenden Ansprüche, bei dem eine Kühl- und / oder Heizeinheit (17) an dem Frischluftkanal vorgesehen ist.

12. Landwirtschaftliches Fahrzeug nach Anspruch 10, bei dem die Einheit (17) unter dem Niveau eines Fahrersitzes (19) vorgesehen ist.

## Revendications

1. Véhicule agricole (1) ayant un corps de véhicule, une cabine de conducteur (5), et un conduit d'air frais s'étendant entre au moins une ouverture d'admission (12) formée sur l'extérieur du corps de véhicule et la cabine de conducteur (5), **caractérisé en ce que** l'ouverture d'admission (12) est formée dans un garde-boue arrière (11) du corps de véhicule.

2. Véhicule agricole selon la revendication 1, dans lequel l'ouverture d'admission (12) est formée dans une partie du garde-boue arrière (11) qui se trouve devant un essieu arrière.

3. Véhicule agricole selon la revendication 1 ou 2, dans lequel l'ouverture d'admission (12) est située au-dessus du sommet (14) de roues avant (2) du véhicule (1).

4. Véhicule agricole selon l'une quelconque des revendications précédentes, dans lequel le garde-boue (11) est sensiblement en forme d'arc s'étendant autour d'une roue arrière (3) et ayant un côté interne (24) faisant face à la roue arrière (3) et un côté externe (25) opposé audit côté interne (24), l'ouverture d'admission (12) étant formée dans ledit côté externe (25).

5. Véhicule agricole selon la revendication 4, dans lequel le côté externe (25) est en forme de gradin en coupe transversale, l'ouverture d'admission (12) étant formé dans un flanc raide du gradin.

6. Véhicule agricole selon l'une quelconque des revendications précédentes, dans lequel l'ouverture d'admission (12) comprend une grille (29).

7. Véhicule agricole selon l'une quelconque des revendications précédentes, dans lequel au moins une partie dudit garde-boue (11) est un corps creux, dont une cavité fait partie dudit conduit d'air frais.

8. Véhicule agricole selon la revendication 7, dans lequel la cavité est délimitée par des parois interne et externe (24, 25), des empreintes (32) étant formées sur la paroi interne (24) pour supporter la paroi externe (25).

9. Véhicule agricole selon l'une quelconque des revendications précédentes, dans lequel le conduit d'air frais comprend une partie amont s'étendant à l'intérieur dudit garde-boue (11) et une partie aval, dont au moins une partie (16) est formée dans une paroi arrière de la cabine de conducteur (5).

10. Véhicule agricole selon l'une quelconque des revendications précédentes, dans lequel des ouvertures d'admission (12) et parties amont de conduit d'air frais sont formées dans les garde-boues arrière gauche et droit (11), et un collecteur (16) au niveau duquel se rencontrent les parties amont est formé dans ladite paroi arrière.

11. Véhicule agricole selon l'une quelconque des revendications précédentes, dans lequel une unité de refroidissement et/ou de chauffage (17) est prévue au niveau dudit conduit d'air frais.

12. Véhicule agricole selon la revendication 10, dans lequel ladite unité (17) est prévue en dessous du niveau d'un siège de conducteur (19).
